# EUROPÄISCHE PATENTSCHRIFT

(11) **EP 0 699 572 B1**
(45) Veröffentlichungstag und Bekanntmachung des Hinweises auf die Patenterteilung: **22.07.1998**
(21) Anmeldenummer: 95109524.9
(22) Anmeldetag: 20.06.1995
(51) Int. Cl.: B60T 8/88, B60T 17/22, G01L 5/28

(54) **Verfahren zur Überprüfung eines Antiblockierungssystems in einem Fahrzeug**
Method for checking an anti-lock system in a vehicle
Procédé de contrôle d'un système anti-bloquage dans un véhicule

(30) Priorität: 30.08.1994 DE 4430782
(43) Veröffentlichungstag der Anmeldung: 06.03.1996
(73) Patentinhaber: WABCO GmbH, 30453 Hannover (DE)
(72) Erfinder: Gieseler, Axel, D-30163 Hannover (DE); Lindemann, Klaus, D-30989 Gehrden (DE); Möller, Johannes, D-31275 Lehrte/Arpke (DE); Riedemann, Henrich, D-30457 Hannover (DE); Ruhnau, Gerhard, D-31535 Neustadt (DE); Saba, Manfred, D-30952 Ronnenberg (DE); Ulrich, Weihe, D-30167 Hannover (DE)
(74) Vertreter: Schrödter, Manfred

(56) Entgegenhaltungen:
- DE-A- 3 415 193
- DE-A- 4 005 299
- US-A- 3 872 720

## Beschreibung

Die Erfindung bezieht sich auf ein Verfahren zur Überprüfung eines Antiblockiersystems (ABS) in einem Fahrzeug gemäß dem Oberbegriff der Patentansprüche 1 oder 2. Ein derartiges ABS ist üblicherweise mit einer Elektronik aufgebaut, die einen entsprechend programmierten Mikrocomputer enthält.

Eine solche Überprüfung, insbesondere der Installation des Systems, ist ratsam nach einer Erstinstallation des Antiblockiersystems im Fahrzeug oder auch nach einer Wiederinbetriebnahme eines Antiblockiersystems nach einer Reparatur. Dabei kann die Installation bzw. Wiederinbetriebnahme entweder bei einem Fahrzeug-Hersteller oder in einer Reparaturwerkstatt erfolgen.

Typische Fehler, die bei der Installation des Antiblockiersystems im Fahrzeug auftreten können, sind das Vertauschen der Anschlüsse von Radgeschwindigkeits-Sensoren bzw. Bremsdruck-Modulatoren. Hierdurch kann es vorkommen, daß bei einem Blockieren eines Rades nicht der zugehörige Modulator, sondern ein Modulator eines anderen Rades betätigt wird. Die Elektronik selbst kann solche Fehler nicht ohne weiteres erkennen. Durch derartige Fehler wird das Antiblockiersystem aber funktionsunfähig.

Ein weiterer Fehler liegt vor, wenn ein Modulator oder ein Sensor irrtümlich überhaupt nicht angeschlossen ist. Auch ein solcher Fehler kann unter Umständen von der Elektronik selbst nicht erkannt werden.

Es sind verschiedene Diagnose-Geräte zum Auslesen eines Fehlers aus dem Fehlerspeicher der Elektronik und auch zur aktiven Überprüfung des Antiblockiersystems einschließlich Verkabelung bekannt (WABCO-Druckschrift "Anti-Blockier-Systeme (ABS) für Nutzfahrzeuge", 1992).

Hiernach kann z. B. die Art des verbauten Systems, d. h. die Zahl der Radsensoren und Modulatoren, mittels eines Blink-Codes ausgegeben werden. Mit dem gleichen Code kann auch der Inhalt des Fehlerspeichers ausgelesen werden.

Bequemer ist eine direkte Anzeige der Fehler-Nummer mit einem Fehler-Code-Display.

Noch komfortabler ist die untersuchung des Antiblockiersystems mit einem speziellen Prüfgerät (Diagnostic-Controller).

Oftmals ist jedoch eine spezielle Prüfausrüstung nicht vorhanden, oder es fehlt qualifiziertes Personal zum Bedienen der Geräte. Darüber hinaus ist es mit den bekannten Prüfgeräten nicht möglich, den gesamten Regelkreis Sensor-Elektronik-Modulator-Bremszylinder vollständig zu überprüfen.

Schwierig ist es auch, einen mechanischen Defekt am Modulator, der zur fehlerhaften Ansteuerung des Bremszylinders führen kann, zu erkennen.

Aus der DE-A-40 05 299 ist ein Verfahren zur Überprüfung eines ABS und/oder ASR-Systems mit Hilfe eines Rollenprüfstands bekannt. Dabei wird ein Prüfprogramm über die Diagnose-Schnittstelle des ABS im Steuergerät aktiviert und dadurch das gesamte System als Einheit geprüft. Das Prüfprogramm ist entweder im ABS-Steuergerät oder in einem externen Prüf-Gerät gespeichert.

Der Erfindung liegt die Aufgabe zugrunde, ein Verfahren zur einfachen und möglichst vollständigen Prüfung einer Blockierschutz-Installation in einem Fahrzeug anzugeben, das ohne besondere Prüfgeräte auskommt, und auch von wenig geschultem Personal durchgeführt werden kann.

Diese Aufgabe wird durch die in den Patentansprüchen 1 oder 2 enthaltene Erfindung gelöst. Die Unteransprüche enthalten zweckmäßige Weiterbildungen.

Die Erfindung wird im folgenden anhand einer Zeichnung näher erläutert.

Die Fig. 1 zeigt einen Anhänger mit drei Achsen und Antiblockier-System.

Die Fig. 2 zeigt ein Flußdiagramm des erfindungsgemäßen Verfahrens.

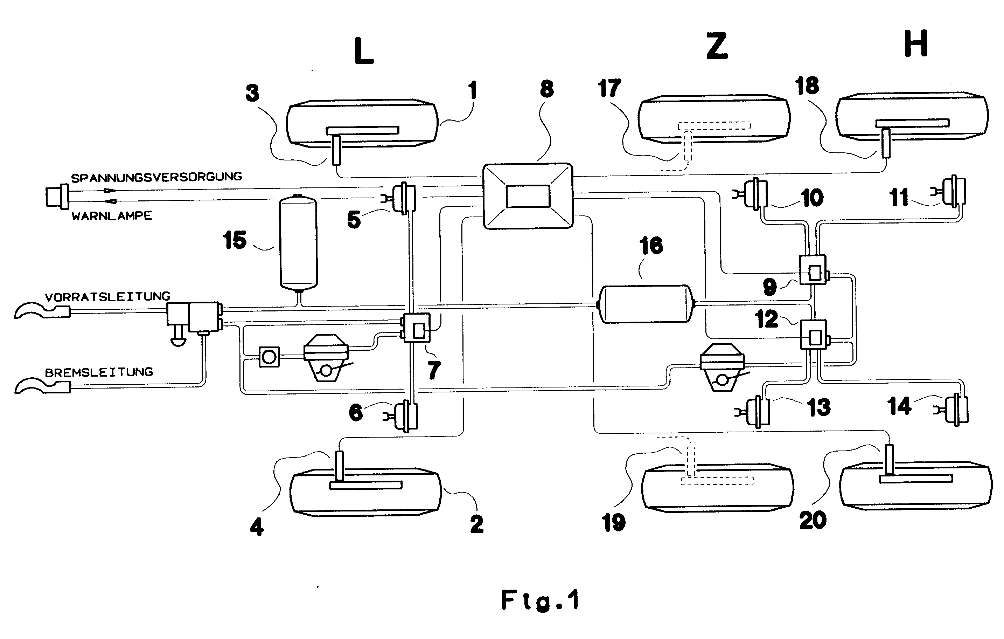

In der Fig. 1 ist als Ausführungsbeispiel ein Antiblockiersystem für Anhänger dargestellt. Als Verbindung zum Zugwagen sind vorgesehen: eine Spannungsversorgung für eine ABS-Elektronik (8), eine Verbindung für eine von der Elektronik (8) anzusteuernde Warnlampe im Zugwagen, eine pneumatische Verbindung für die Druck-Vorratsleitung sowie eine weitere pneumatische Verbindung für die Bremsleitung. Die Bremsung erfolgt mit Druckluft, welche in Behältern (15, 16) gespeichert ist. Der Anhänger weist drei Achsen auf, und zwar eine Lenkachse (L), eine Zwischenachse (Z) und eine Hinterachse (H). Die beiden Räder (1, 2) der Lenkachse sind sensiert, d. h. sie sind mit Zahnkränzen sowie mit Radgeschwindigkeitssensoren (3, 4) ausgerüstet. Die Räder der Zwischenachse (Z) sind nicht sensiert, können aber wahlweise mit Sensoren (17, 19) ausgerüstet werden (gestrichelt dargestellt). Die Räder der Hinterachse (H) sind wiederum sensiert (Sensoren (18, 20)).

Alle Radgeschwindigkeitssensoren sind über (unterschiedlich lange) Verbindungsleitungen an die ABS-Elektronik (8) angeschlossen.

Die Räder der Lenkachse (L) werden mittels Bremszylinder (5, 6) gebremst. Die Luftzufuhr zu den genannten Bremszylindern wird über einen gemeinsamen Modulator (7) (Regelventil) gesteuert. Dieser ist mit einer Leitung an die Elektronik (8) angeschlossen.

Für die Regelung der beiden Vorderräder (1, 2) des Anhängers ist nur ein gemeinsamer Modulator (7) vorgesehen. Daraus erkennt man, daß hier die Regelung nicht individuell, sondern beispielsweise nach dem Select-Low-Prinzip (SL) arbeitet.

In ähnlicher Weise ist jeweils seitenweise für die Räder der Zwischenachse (Z) und der Hinterachse (H) je ein gemeinsamer Modulator (9 und 12) vorgesehen. Die Regelung erfolgt wieder nach einem Select-Low-Prinzip seitenweise mit dem Modulator (9) für die Bremszylinder (10, 11) bzw. mit dem Modulator (12) für die Bremsyzlinder (13, 14). Dies gilt für den Fall, daß die Räder sowohl der Zwischenachse als auch der Hinterachse sensiert sind. Beide Modulatoren (9, 12) sind wiederum elektrisch mit der ABS-Elektronik (8) verbunden, beziehungsweise werden von dieser angesteuert.

Zur Überprüfung des Antiblockiersystems nach dem erfindungsgemäßen Verfahren muß nach erfolgter Installation des ABS zunächst ein sensiertes Rad in Drehung versetzt werden. Hierzu muß das betreffende Rad entweder mit einem Wagenheber hochgebockt werden, so daß es frei drehbar ist, oder das Fahrzeug, also hier der Anhänger, muß mit dem zu drehenden Rad auf einen Rollen-Prüfstand gefahren werden. Anschließend bringt der Anwender das nun drehbare Rad in Rotation, und zwar vorzugsweise auf eine Radgeschwindigkeit zwischen 4 und 15 km/h. Anschließend wird das Rad wieder abgebremst.

Hierdurch wird die ABS-Elektronik (8) durch ein besonderes Programmteil veranlaßt, ein Ansteuersignal an den zum gedrehten Rad gehörenden Modulator abzugeben.

Der Anwender erkennt hieraus, ob die Zuordnung des gedrehten Rades zum betätigten Modulator in Ordnung ist, d. h., ob der angesteuerte Modulator zum gedrehten Rad gehört. Dies erkennt der Anwender entweder durch das Geräusch des betätigten Modulators, oder, wenn der Anhänger mit Druckluft versorgt ist, durch die Betätigung des entsprechenden Bremszylinders und die hierdurch erfolgende Abbremsung des zuvor gedrehten Rades.

Nachdem die beschriebene Prozedur auch an den anderen sensierten Rädern wiederholt worden ist, kann der Anwender feststellen, ob alle Modulatoren und Sensoren richtig zugeordnet sind.

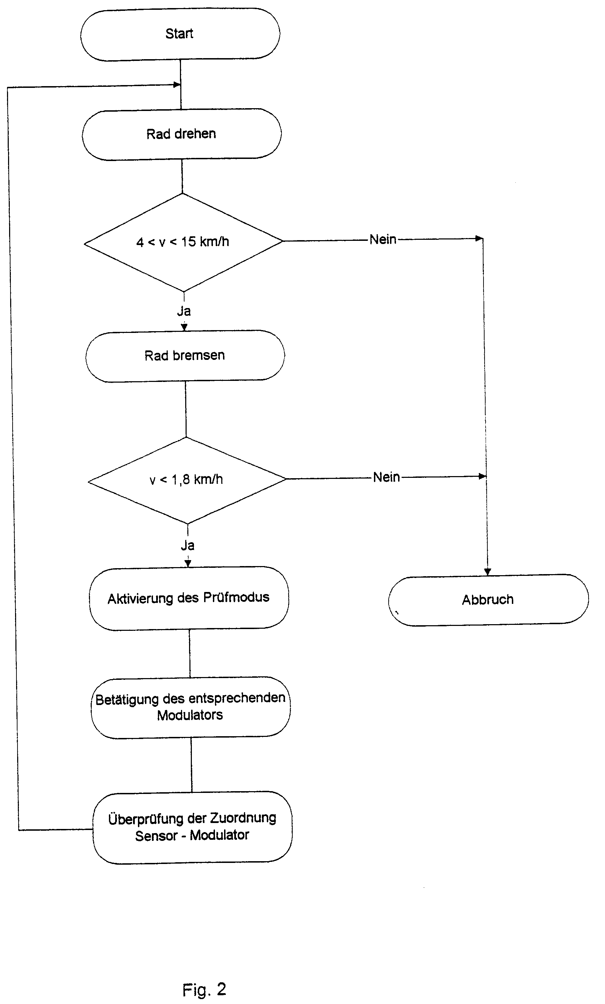

Ein entsprechendes Flußdiagramm, das im Mikrocomputer der ABS-Elektronik (8) abgearbeitet wird, ist in der Fig. 2 dargestellt.

Wahlweise kann die Elektronik (8) auch zur Durchführung des Prüfverfahrens vom Anwender durch ein externes Signal (Reizung) in den Prüfmodus geschaltet werden. Hierzu ist an der Anschlußleiste der Elektronik eine entsprechende Beschaltung durchzuführen.

Wenn das Fahrzeug nicht mit Druckluft versorgt ist, wird das Rad nach der Drehung wieder von Hand oder durch den Rollenprüfstand zum Stillstand gebracht. Hierzu wird vorteilhaft eine Radgeschwindigkeit von etwa 1,8 km/h wieder unterschritten, wodurch die Elektronik (8) den Prüfmodus aktiviert.

Vorteilhaft kann die Elektronik (8) auch so programmiert sein, daß zur Unterscheidung der verschiedenen Achsen (Hinterachse (H), Zusatzachse (Z) und Lenkachse (L)) die zugehörigen Modulatoren in unterschiedlicher Weise betätigt werden. Dies bedeutet, daß nach einem vorgegebenen Muster der Bremsdruck aufgebaut, abgebaut oder in Pulsen verändert werden kann. Hierdurch ist der Anwender in der Lage zu erkennen, ob eventuell Anschlüsse von verschiedenen Achsen vertauscht worden sind.

Natürlich kann das erfindungsgemäße Verfahren auch abgewandelt werden, ohne daß der Rahmen des Patentanspruchs 1 verlassen wird. So kann beispielsweise auch festgelegt sein, daß jeweils der dem sensierten, gedrehten Rad gegenüberliegende Modulator von der Elektronik (8) betätigt wird.

Es ist auch möglich, daß die Elektronik nach dem Drehen eines Rades die Nummer dieses Rades ausgibt, z. B. über den Blinkcode. Anschließend zieht der Anwender den Stecker des zugehörigen Modulators ab. Dies erkennt die Elektronik, und gibt noch einmal die gleiche Nummer aus, wenn Sensor und Modulator zusammengehören. Anderenfalls unterscheiden sich beide Nummern, wodurch der Anwender einen Fehler (vertauschter Modulator) erkennt.

Bei der Prüfung eines Zugwagens mit ABS auf einem Rollenprüfstand ist es zweckmäßig, dem Fahrer bzw. Anwender zunächst zu signalisieren, die Bremse zu betätigen. Hierdurch wird das gedrehte Rad abgebremst. Anschließend betätigt die Elektronik nur den zugehörigen Modulator. Durch diese ABS-Aktivierung wird der Bremszylinder dieses Rades entlüftet, so daß es wieder drehbar wird. Hierdurch ist die richtige Zuordnung Sensor-Modulator-Bremszylinder-Rad besonders einfach nachprüfbar.

Bei einem Motorwagen mit Anfahr-Schlupf-Regelung (ASR) kann der Hinterachsdruck zum Einbremsen des Rades auch ohne Fahrer automatisch über die dann vorhandenen ASR-Ventile eingesteuert werden.

In jedem Fall ist der Anwender durch das beschriebene Prüfverfahren in der Lage, ohne zusätzliche teure Prüfgeräte die Installation des Blockierschutz-Systems, insbesondere auf vertauschte Verkabelung, zu überprüfen.

## Patentansprüche

1. Verfahren zur Überprüfung eines Antiblockiersystems (ABS) in einem Fahrzeug, insbesondere bei einer Erstinstallation oder bei einer Wiederinbetriebnahme, auf richtigen Anschluß der Komponenten Radsensor (3, 4, 17, 18, 19, 20) und Bremsdruck-Modulator (7, 9, 12) an eine ABS-Elektronik (8),
gekennzeichnet durch folgende Schritte:
a) der Anwender bringt ein einzelnes, sensiertes Rad des Fahrzeugs zur Drehung und anschließend zum Stillstand,
b) hierdurch wird die ABS-Elektronik (8) in einen Prüfmodus geschaltet,
c) die Elektronik (8) gibt ein Ansteuersignal an den dem sensierten Rad zugeordneten Modulator,
d) der Anwender überprüft, ob der betätigte Modulator zum gedrehten Rad gehört.

2. Verfahren zur Überprüfung eines Antiblockiersystems (ABS) in einem Fahrzeug, insbesondere bei einer Erstinstallation oder bei einer Wiederinbetriebnahme, auf richtigen Anschluß der Komponenten Radsensor (3, 4, 17, 18, 19, 20) und Bremsdruck-Modulator (7, 9, 12) an eine ABS-Elektronik (8),
gekennzeichnet durch folgende Schritte:
a) der Anwender schaltet die Elektronik (8) durch ein externes Signal in einen Prüfmodus,
b) der Anwender bringt ein einzelnes, sensiertes Rad des Fahrzeugs zur Drehung und anschließend zum Stillstand,
c) die Elektronik (8) gibt ein Ansteuersignal an den dem sensierten Rad zugeordneten Modulator,
d) der Anwender überprüft, ob der betätigte Modulator zum gedrehten Rad gehört.

3. Verfahren nach Anspruch 1 oder 2, dadurch gekennzeichnet, daß bei der Drehung eines Rades eine vorbestimmte Radgeschwindigkeit erreicht werden muß.

4. Verfahren nach Anspruch 3, dadurch gekennzeichnet, daß die Radgeschwindigkeit zwischen 4 und 15 km/h liegt.

5. Verfahren nach Anspruch 1, dadurch gekennzeichnet, daß nach der Unterschreitung einer Radgeschwindigkeit von etwa 1,8 km/h die Elektronik (8) den Prüfmodus aktiviert und den zum sensierten Rad gehörigen Modulator betätigt.

6. Verfahren nach einem oder mehreren der Ansprüche 1 bis 5, dadurch gekennzeichnet, daß zur Unterscheidung einer Hinterachse (H), einer Zusatzachse (Z) und einer Lenkachse (L) die zugehörigen Modulatoren in unterschiedlicher Weise durch die Eletronik (8) betätigt werden.

7. Verfahren nach Anspruch 6, dadurch gekennzeichnet, daß die Modulatoren gepulst betätigt werden.

8. Verfahren nach einem oder mehreren der Ansprüche 1 bis 7, dadurch gekennzeichnet, daß die Elektronik (8) die Nummer des gedrehten Rades ausgibt, der Anwender anschließend den Stecker des zugehörigen Modulators abzieht, und die Elektronik (8) bei richtiger Verkabelung noch einmal die gleiche Nummer ausgibt.

9. Verfahren nach Anspruch 8, dadurch gekennzeichnet, daß die Ausgabe über einen Blinkcode erfolgt.

10. Verfahren nach einem oder mehreren der Ansprüche 1 bis 9 zur Prüfung eines Zugwagens mit ABS auf einem Rollenprüfstand, dadurch gekennzeichnet, daß ein Rad zur Drehung gebracht wird, dem Anwender signalisiert wird, die Bremse zu betätigen, und die Elektronik (8) daraufhin nur den zu dem einzelnen gedrehten Rad gehörigen Modulator betätigt.

## Claims

1. Method for checking an anti-lock braking system (ABS) in a vehicle, especially when initially installed or when being returned to service, for the correct connection of the components of wheel sensor (3, 4, 17, 18, 19, 20) and brake pressure modulator (7, 9, 12) to an ABS electronics unit (8),
characterised by the following steps:
a) the user causes an individual, sensed wheel of the vehicle to rotate and then to stop,
b) as a result thereof the ABS electronics unit (8) is switched into a testing mode,
c) the electronics unit (8) sends a control signal to the modulator assigned to the sensed wheel,
d) the user checks whether the actuated modulator belongs to the rotated wheel.

2. Method for checking an anti-lock braking system (ABS) in a vehicle, especially when initially installed or when being returned to service, for the correct connection of the components of wheel sensor (3, 4, 17, 18, 19, 20) and brake pressure modulator (7, 9, 12) to an ABS electronics unit (8),
characterised by the following steps:
a) the user switches the electronics unit (8) into a testing mode by means of an external signal,
b) the user causes an individual, sensed wheel of the vehicle to rotate and then to stop,
c) the electronics unit (8) sends a control signal to the modulator assigned to the sensed wheel,
d) the user checks whether the actuated modulator belongs to the rotated wheel.

3. Method according to claim 1 or claim 2, characterised in that when a wheel is rotated, a predetermined wheel speed must be achieved.

4. Method according to claim 3, characterised in that the wheel speed is from 4 to 15 km/h.

5. Method according to claim 1, characterised in that, after the wheel speed has fallen below about 1.8 km/h again, the electronics unit (8) activates the testing mode and actuates the modulator associated with the sensed wheel.

6. Method according to one or more of claims 1 to 5, characterised in that, in order to distinguish between a rear axle (H), an auxiliary axle (Z) and a steering axle (L), the associated modulators are differently actuated by the electronics unit (8).

7. Method according to claim 6, characterised in that the modulators are actuated in a pulsed manner.

8. Method according to one or more of claims 1 to 7, characterised in that the electronics unit (8) outputs the number of the rotated wheel, the user then disconnects the plug connector of the associated modulator, and the electronics unit (8) outputs the same number again if the cabling is correct.

9. Method according to claim 8, characterised in that the output is made by means of a flashing code.

10. Method according to one or more of claims 1 to 9 for the testing, on a roller test stand, of a tractor vehicle having ABS, characterised in that a wheel is caused to rotate, the user is signalled to actuate the brake, and the electronics unit (8) then actuates only the modulator associated with the individual rotated wheel.

## Revendications

1. Procédé de contrôle d'un système anti-blocage (ABS) d'un véhicule, en particulier dans le cas d'une première installation ou d'une remise en service, pour contrôler le raccordement correct des composants détecteur de la rotation des roues (3, 4,17, 18, 19, 20) et modulateur de la pression de freinage (7, 9, 12) sur une électronique de système anti-blocage ABS (8),
caractérisé par les pas suivants:
a) l'utilisateur met en rotation une seule roue, faisant l'objet d'une détection, du véhicule puis l'arrête,
b) de ce fait l'électronique du système anti-blocage ABS (8) commute en mode contrôle,
c) l'électronique (8) envoie un signal d'activation au modulateur correspondant à la roue faisant l'objet d'une détection,
d) l'utilisateur contrôle si le modulateur activé appartient à la roue entraînée en rotation.

2. Procédé de contrôle d'un système anti-blocage (ABS) d'un véhicule, en particulier, dans le cas d'une première installation ou d'une remise en service, pour contrôler le raccordement correct des composants détecteur de la rotation des roues (3, 4,17, 18, 19, 20) et modulateur de la pression de freinage (7, 9, 12) sur une électronique de système anti-blocage ABS (8),
a) l'utilisateur commute l'électronique (8) en un mode contrôle au moyen d'un signal extérieur,
b) l'utilisateur met en rotation une seule roue, faisant l'objet d'une détection, du véhicule puis l'arrête,
c) l'électronique (8) envoie un signal d'activation au modulateur correspondant à la roue faisant l'objet d'une détection,
d) l'utilisateur contrôle si le modulateur activé appartient à la roue entraînée en rotation.

3. Procédé selon la revendication 1 ou 2, caractérisé par le fait que lors de la mise en rotation d'une roue il faut atteindre une vitesse prédéterminée de rotation de la roue.

4. Procédé selon la revendication 3, caractérisé par le fait que vitesse de rotation de la roue se situe entre 4 et 15 km/h.

5. Procédé selon la revendication 1, caractérisé par le fait qu'après avoir dépassé, par valeur inférieure, une vitesse de rotation de la roue d'environ 1,8 km/h, l'électronique (8) active le mode contrôle et active le modulateur correspondant à la roue faisant l'objet d'une détection.

6. Procédé selon l'une ou plusieurs des revendications 1 à 5, caractérisé par le fait que pour distinguer un essieu arrière (H), un essieu supplémentaire (Z) et un essieu directeur (L), les modulateurs correspondants sont activés de différentes façons par l'électronique (8).

7. Procédé selon la revendication 6, caractérisé par le fait que les modulateurs sont activés de façon pulsatoire.

8. Procédé selon une ou plusieurs des revendications 1 à 7, caractérisé par le fait que l'électronique (8) émet le numéro de la roue entraînée en rotation, que l'utilisateur tire ensuite la fiche du modulateur correspondant et que, si le câblage est correct, l'électronique (8) émet à nouveau le même numéro.

9. Procédé selon la revendication 8, caractérisé par le fait que l'émission se fait par l'intermédiaire d'un code clignotant.

10. Procédé selon l'une ou plusieurs des revendications 1 à 9, pour le contrôle d'un véhicule tracteur à système anti-blocage ABS sur un banc d'essai à rouleaux, caractérisé par le fait qu'une roue est mise en rotation, qu'il est signalé à l'utilisateur d'actionner le frein et que l'électronique (8) n'active alors que le modulateur correspondant à l'unique roue entraînée en rotation.
